# EUROPEAN PATENT APPLICATION

(11) **EP 2 703 934 A1**
(43) Date of publication of application: **05.03.2014**
(21) Application number: 13173647.2
(22) Date of filing: 25.06.2013
(51) Int. Cl.: G06F 1/16, G06F 3/02, H04N 21/422, H04N 21/436

(54) **Method and display apparatus for processing in input signal**

(30) Priority: 31.08.2012 KR 20120096703
(71) Applicant: Samsung Electronics Co., Ltd, Gyeonggi-do 443-742 (KR)
(72) Inventor: Park, Sang-hyurk, Gyeonggi-do (KR); Kim, Hong-jae, Gyeonggi-do (KR)
(74) Representative: Davies, Robert Ean

(57) **Abstract**

A display apparatus and a method of processing an input signal are provided. A display apparatus includes a switching element which switches an output path for an input signal input through an input reception; and a controller which controls a switching operation of the switching element. A display method includes determining whether the display apparatus needs to use an input signal received from an input; identifying a current output path for the input signal received from the input in response to a determination that the display apparatus needs to use the input signal; and outputting an output path control signal for the display apparatus to use the input signal.

## Description

### CROSS-REFERENCE TO RELATED APPLICATION

This application claims priority from Korean Patent Application No. 10-2012-0096703, filed on August 31, 2012 in the Korean Intellectual Property Office, the disclosure of which is incorporated herein by reference, in its entirety.

### BACKGROUND

### Field

Apparatuses and methods consistent with the exemplary embodiments relate to a display apparatus. In particular, the exemplary embodiments relate to a display method and apparatus which shares an input, such as a keyboard or a mouse, with a computer.

### Description of the Related Art

A known display apparatus performs a variety of functions. However, use of a known input method using a remote control involves inconvenience to a user. In order to use an input device, such as a keyboard or a mouse, an input connected to a computer is first separated from the computer. Subsequently, the separated input is connected to a display, so that an input signal output from the input may be used in the display apparatus.

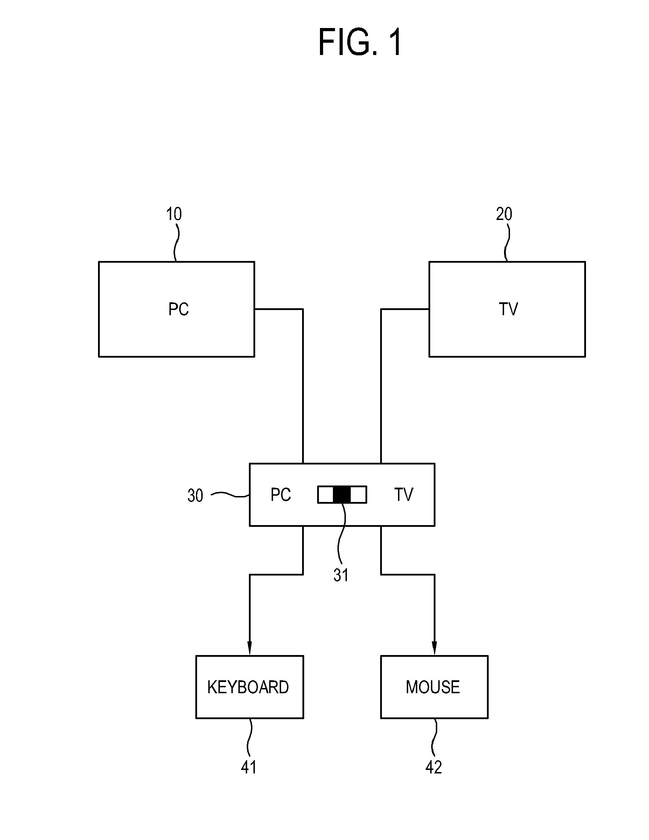

To solve the problem resulting from such inconvenience, a shared input is used. As shown in FIG. 1, through a sharing device 30, a computer 10 and a display apparatus 20, for example, a TV, share a keyboard 41 or a mouse 42. However, the sharing device 30 is inconvenient in use since a user is required to personally switch connection by using a switch 31.

### SUMMARY

An aspect of one or more exemplary embodiments is to provide a method of processing an input signal which enables a display apparatus and an office machine connected to the display apparatus, such as a computer, to share a keyboard or a mouse, and a display apparatus implementing such a function.

Another aspect of one or more exemplary embodiments is to provide a display apparatus which automatically recognizes the necessity of having an input which changes a transmission path for an input signal, and a method of processing an input signal using the display apparatus.

Still another aspect of one or more exemplary embodiments is to provide a display apparatus which is capable of processing an input signal for an office machine, such as a fax machine, and a method of processing an input signal using the display apparatus.

The foregoing and/or other aspects may be achieved by providing a display apparatus that includes an input reception which receives an input signal from an input; a switching element which switches an output path for the input signal input through the input reception; and a controller which controls a switch operation of the switching element.

The input may include at least one of a keyboard and a mouse.

The input may provide the input signal to the input reception in a wireless manner.

The switching element may transmit the input signal which is input through the input reception to a computer which is connected to the display apparatus.

The switching element may transmit the input signal input through the input reception to an office machine which is connected to the display apparatus.

The controller may recognize a source which needs the input or is in a state of needing the input on a display screen and which controls the switching element to enable the display apparatus to use the input signal input through the input reception.

The controller may recognize a signal which is received from a remote controller of the display apparatus and controls the switching element.

Further aspects of one or more exemplary embodiments may be achieved by providing a display apparatus that includes an interface which exchanges data with a plurality of data processing apparatuses; and a controller which transmits a path change request signal of an input which is connected to the data processing apparatuses, to the connected data processing apparatuses through the interface and receiving an input signal of the input through the interface.

The interface may communicate with the data processing apparatuses through any one communication line selected from the group including USB, D-sub and Debug Jack interfaces.

The data processing apparatuses may include at least one office machine selected from the group including a computer, a fax machine and a printer.

Further aspects of one or more exemplary embodiments may be achieved by providing a method of processing an input signal by using a display apparatus that includes determining whether the display apparatus needs to use an input signal received from an input; identifying a current output path for the input signal received from the input when it is determined that the display apparatus needs to use the input signal; and outputting an output path control signal in order for the display apparatus to use the input signal.

As described above, a display apparatus and a method of processing an input signal using the same, according to one or more exemplary embodiments, provide the following effects.

First, one keyboard or mouse may be shared between the display apparatus and a computer without use of an additional switching element.

Second, the display apparatus may automatically switch a path of an input signal.

Third, an input may be shared using a communication line between the display apparatus and the computer.

An exemplary embodiment may provide a display apparatus including a switching element which switches an output path for an input signal input through an input reception; and a controller which controls a switching operation of the switching element. The input reception may receive the input signal from an input, and the input may comprise at least one of a keyboard and a mouse.

According to another exemplary embodiment, the input may wirelessly provide the input signal to the input reception.

The controller may control the switching element by recognizing a signal received from a remote controller. In addition, the input signal may be output to one of a plurality of data processing apparatuses.

Another exemplary embodiment may include an interface which communicates with the data processing apparatuses through any one communication line selected from the group consisting of USB, D-sub and Debug Jack interfaces.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 illustrates an input sharing method of the related art.

FIG. 2 schematically illustrates a configuration of a display apparatus according to an exemplary embodiment.

FIG. 3 is a flowchart illustrating a method of processing an input signal to implement an exemplary embodiment of FIG. 2.

FIG. 4 illustrates a smart hub implemented in the display apparatus according to an exemplary embodiment.

FIG. 5 illustrates an Internet search function implemented in the display apparatus according to an exemplary embodiment.

FIG. 6 illustrates a social networking function implemented in the display apparatus according to an exemplary embodiment.

FIG. 7 illustrates a configuration of a display apparatus according to another exemplary embodiment.

FIG. 8 illustrates a configuration of a display apparatus according to still another exemplary embodiment.

### DETAILED DESCRIPTION OF EXEMPLARY EMBODIMENTS

Hereinafter, a display apparatus and a method of processing an input signal using the same according to exemplary embodiments will be described with reference to the accompanying drawings. In the following description, a display apparatus (hereinafter, referred to as a "television (TV)") will be illustrated as a display apparatus with a smart function, such as, a multi-function monitor (MFM). For example, the display apparatus includes a display device providing not only a general TV function but also a social network service (SNS), such as Twitter and Facebook, and an Internet search function.

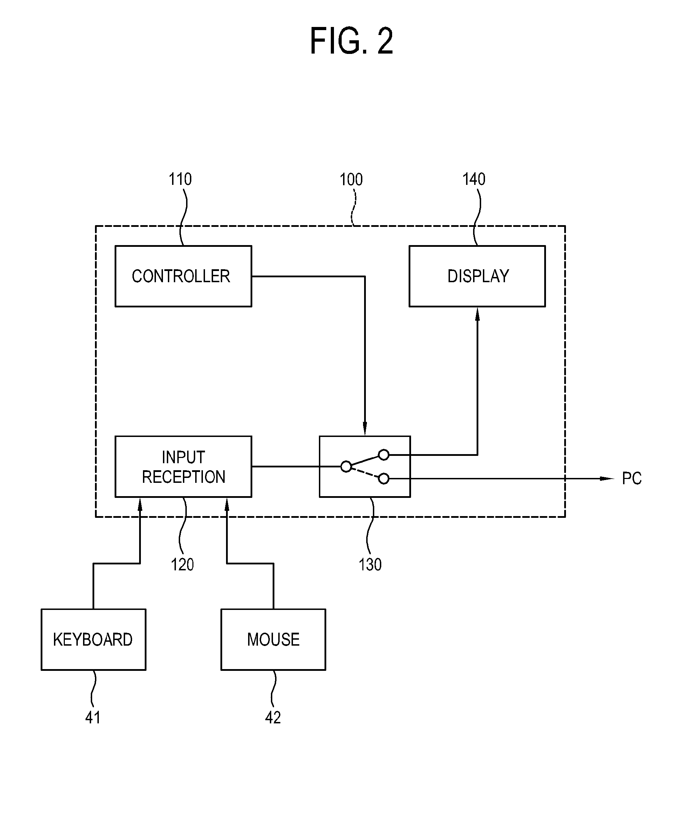

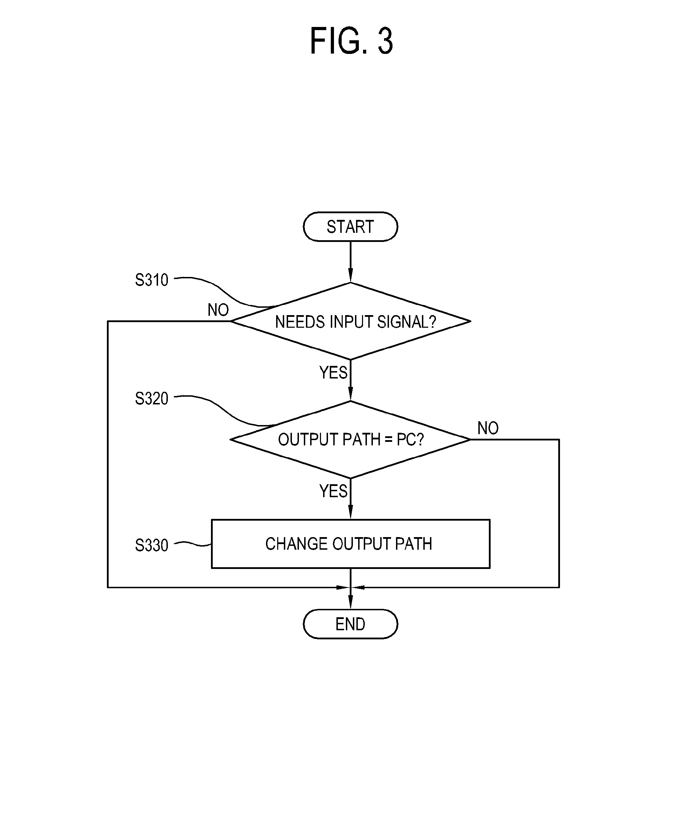

FIG. 2 schematically illustrates a configuration of a display apparatus according to an exemplary embodiment, and FIG. 3 is a flowchart which illustrates a method of processing an input signal using the same. In an exemplary embodiment, a TV includes a switching element which switches an input signal. A signal interfacing connector which connects an input to a part of the TV is installed in the TV and serves to receive an input signal provided from the input. That is, a keyboard and a mouse, generally connected to a personal computer (PC), are connected to the TV, thereby transmitting a signal input through the keyboard and the mouse to the computer.

The TV 100 includes an input reception 120 which receives an input signal provided from an input, device, such as a keyboard 41 and a mouse 42; a switching element 130 which switches an output path for the input signal input through the input reception 120, and a controller 110 which controls a switch operation of the switching element 130 in order to transmit the input signal to the PC or a display 140 in the TV.

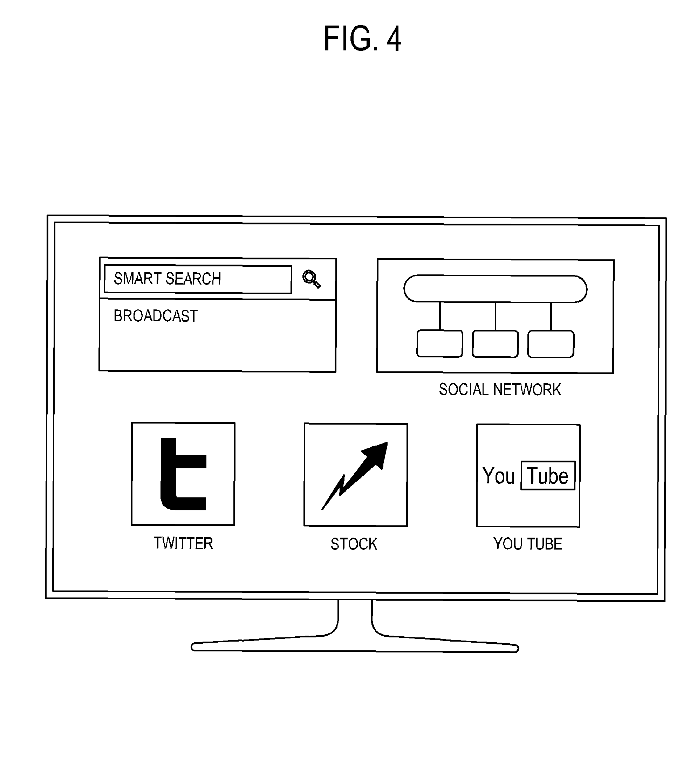

TVs having a variety of additional functions are being developed in accordance with ongoing technological advancement. For example, a user may perform a Smart Hub function using a functionally advanced TV, as shown in FIG. 4. Such a function may be implemented by the user using a menu button (on-screen display (OSD)) present on an area of the TV or on a remote controller.

A "Smart Hub" is a convenient customized user interface (UI) including a "Smart Search," a "Social Network Service," and a "Broadcast Information Quick Search," which are clearly organized on a single screen so that the user may easily recognize the interface in order to conveniently obtain content through one click.

The 'Smart Search' is a service which retrieves all related files, for example movies, dramas and music, stored in both the TV and peripherals connected via a cable or wirelessly, for example, a PC, a mobile phone and a camera, when a search keyword is input. Further, the "Smart Hub" includes the "Broadcast Information Quick Search" function which enables retrieval of relevant information in real time using a caption keyword of a broadcast being watched; the "Social Network Service" function enabling Internet search; use of Twitter or Facebook, or real-time chatting while watching a TV, without changing a screen.

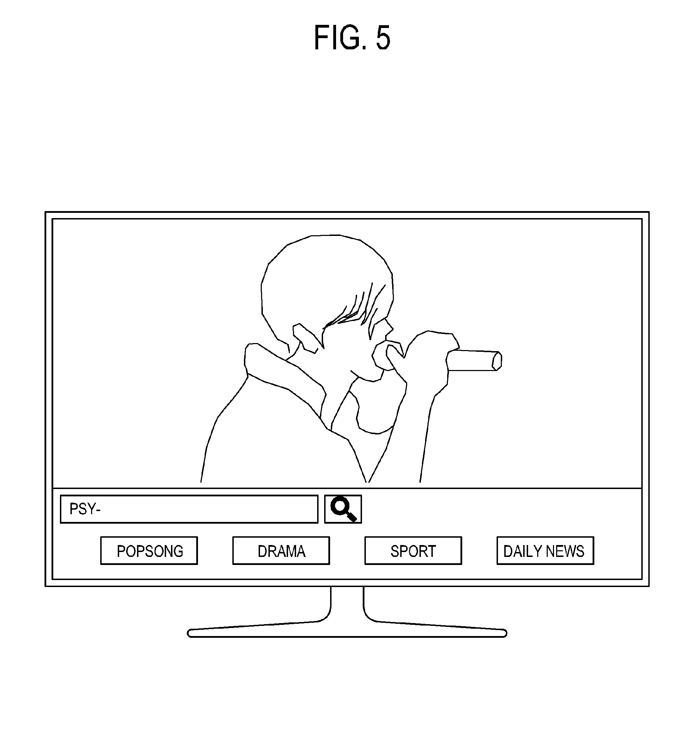

For example, when Internet search is needed while watching TV, an Internet search screen is launched as shown in FIG. 5. Here, an Internet search bar is displayed on an area of the display while maintaining a TV screen being watched. The TV screen may be reduced by a predetermined ratio as necessary. When needed, an input bar for Internet search may be displayed at a bottom of the TV screen.

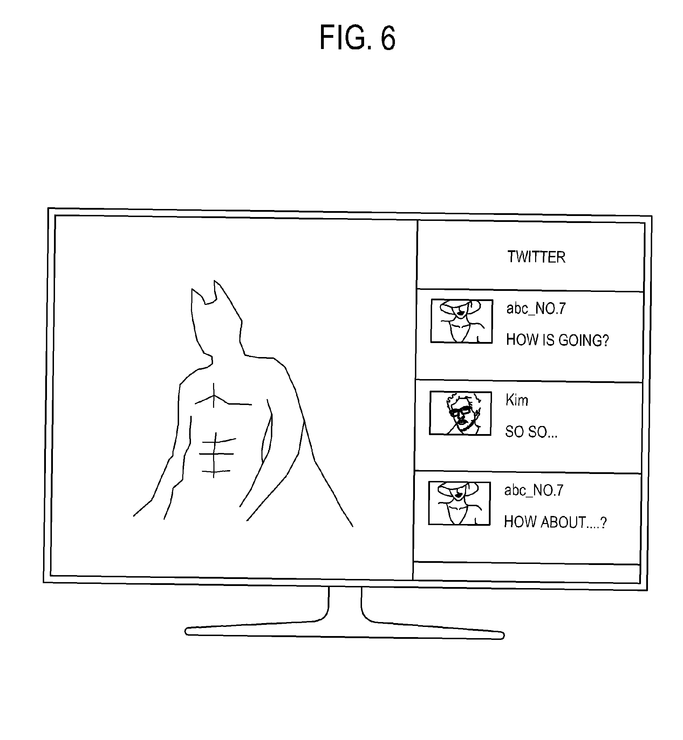

The "Social Network Service (SNS)" is for using an application known as Twitter or Facebook, which is displayed as a screen in an area of the display when a social network application runs, while displaying the TV screen, as shown in FIG. 6.

When the Smart Hub function is performed using the remote controller or the menu OSD, the controller automatically recognizes that the display apparatus needs an input signal through the input (S310).

When the input signal of the input is needed, the controller identifies the output path for the input signal which is being currently transmitted by the input. That is, the controller identifies whether the input signal of the input is currently transmitted to the PC through the switching element (S320).

When the current output path for the input signal is the PC, the controller controls display of the output path through the display 140, in the TV (S330). When the current output path for the input signal is the TV, the input signal of the input provided through the input reception 120 is transmitted to the display 140.

Although not shown in FIG. 3, the method may further include receiving a signal for driving an application of the display apparatus, and/or receiving a request signal for changing the output path for the input signal from the remote controller of the display apparatus.

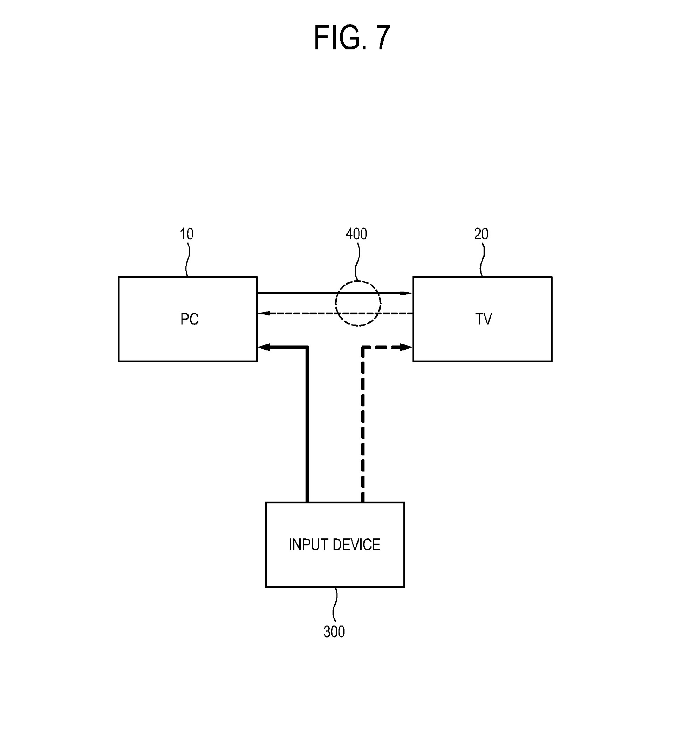

FIG. 7 illustrates a configuration of a display apparatus according to another exemplary embodiment. Unlike the display apparatus according to the foregoing exemplary embodiment, the display apparatus according to this exemplary embodiment controls the use of an input using a communication line connected between a TV and a PC, without a switching element in the TV. For example, an input 300 including a keyboard and a mouse may be connected to the PC 10 (indicated in a solid line) or the TV 20 (indicated in a dotted line). Hereinafter, the display apparatus connected to the PC 10, generally used, will be illustrated.

The PC 10 may exchange various kinds of data with the TV 20 through an interface 400which may be configured in different forms. For example, diverse kinds of data, such as a control signal, an image signal, an audio signal and application data, may be transmitted and received through any one communication line selected from the group including USB, D-sub, and Debug Jack interfaces.

When determining that an input signal of the input 300 which connected to the PC 10 is needed for various reasons stated above, a controller in the TV 20 transmits an input signal path change request signal to the PC 10 through the interface 400. The PC 10 receiving the input signal path change request signal transmits an input signal input from the input 300 to the TV 20 through the interface 400.

When the input 300 is connected to the TV 20, the controller in the TV 20 determines whether the TV needs to use the input signal of the input 300 and controls transmission of the input signal provided from the input 300 to the PC 10.

The controller provided in the display apparatus, that is, the TV, recognizes a signal provided from a remote controller of the display apparatus or a state of a button (OSD button), provided in an area of the display apparatus, being pressed, and controls the display apparatus to use an input signal transmitted through the interface, depending on the situation.

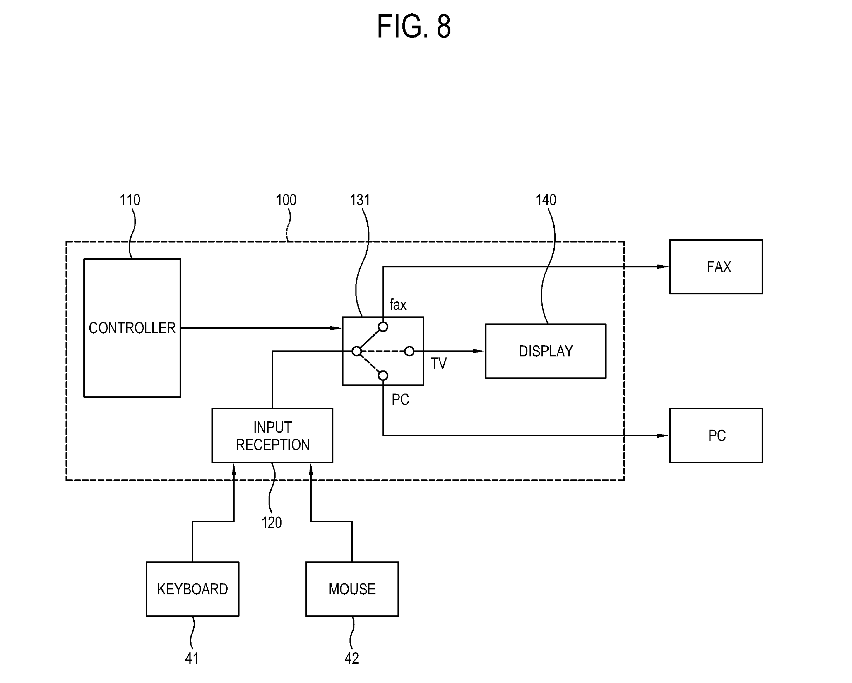

FIG. 8 illustrates a configuration of a display apparatus according to yet another exemplary embodiment. Unlike the display apparatus described with reference to FIG. 2, the display apparatus according to this exemplary embodiment is connected to a plurality of data processing apparatuses through a network, a configuration of which will be illustrated as follows. The display apparatus 100, for example, a TV 100, includes an input reception 120 which receives an input signal from a keyboard 41 and/or a mouse 42; a switching element 131 which switches an output path for a signal provided from the input reception 120; a controller 110 which controls a switch operation of the switching element 131, and a display 140 which displays an input signal provided through the switching element 131. Unlike the switching element shown in FIG. 2, an output terminal of the switching element 131 is connected to a fax, a PC, and the display 140.

For example, upon occurrence of a case where information acquired through various events, such as information related to a search result obtained while watching a TV or information obtained from a social networking activity, or data stored in a storage (not shown) in the display apparatus needs transmitting to the fax, the information connected through the network.

When a user does not know a fax number of a recipient of data to be sent, the user may acquire a phone number of the recipient from a memory (not shown) in the fax, which is connected through the network. Such an operation may be implemented by general data transmission and reception between devices through the network. When the phone number of the recipient is acquired and the data to be sent is selected, the user inputs the phone number of the recipient. The phone number of the recipient may be input through manipulation of a screen using the keyboard 41 or the mouse 42. The controller controls the switching element 131, thereby transmitting to the fax the input phone number. Meanwhile, instead of simply inputting the phone number, various types of input signals, for example, signals for setting a fax machine; for retrieving a telephone directory, or for changing a name of a telephone directory, may be transmitted to the fax.

Although a few exemplary embodiments have been shown and described, it will be appreciated by those skilled in the art that changes may be made in these exemplary embodiments without departing from the principles and spirit of the invention, the scope of which is defined in the appended claims and their equivalents.
Attention is directed to all papers and documents which are filed concurrently with or previous to this specification in connection with this application and which are open to public inspection with this specification, and the contents of all such papers and documents are incorporated herein by reference.
All of the features disclosed in this specification (including any accompanying claims, abstract and drawings), and/or all of the steps of any method or process so disclosed, may be combined in any combination, except combinations where at least some of such features and/or steps are mutually exclusive.
Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.
The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a switching element which switches an output path for an input signal input through an input reception; and
a controller which controls a switching operation of the switching element.

2. The display apparatus of claim 1, further comprising: an input which provides the input signal to the input reception.

3. The display apparatus of claim 2, wherein the input comprises at least one of a keyboard and a mouse.

4. The display apparatus of claim 3, wherein the input wirelessly provides the input signal to the input reception.

5. The display apparatus of claim 1, wherein the controller controls the switching element by recognizing a signal received from a remote controller.

6. The display apparatus of claim 1 wherein the input signal is output to one of a plurality of data processing apparatuses connected to the display apparatus.

7. The display apparatus of claim 6, further comprising: an interface which communicates with the data processing apparatuses through any one communication line selected from the group consisting of USB, D-sub and Debug Jack interfaces.

8. A method of processing an input signal using a display apparatus, the method comprising:
determining whether the display apparatus needs to use an input signal received from an input;
identifying a current output path for the input signal received from the input in response to a determination whether the display apparatus needs to use the input signal; and
outputting an output path control signal for the display apparatus to use the input signal.

9. The method of claim 8, wherein the input comprises at least one of a keyboard and a mouse.

10. The method of claim 8, wherein the output path enables the input signal to be transmitted to the display apparatus or to at least one data processing apparatus which is connected to the display apparatus.

11. The method of claim 10, wherein the data processing apparatus comprises at least one office machine selected from the group consisting of a computer, a fax machine and a printer.

12. The method of claim 8, wherein the output path control signal is transmitted to an input signal path change switch provided in the display apparatus.

13. The method of claim 8, wherein the output path control signal is transmitted to a computer which is connected to the display apparatus through a communication line.

14. The method of claim 8, wherein the communication line enables data transmission between the display apparatus and the computer through any one of a USB, D-sub or Debug Jack interfaces.

15. The method of claim 8, further comprising receiving from a remote controller of the display apparatus a request signal for changing the output path for the input signal.
